# EUROPÄISCHE PATENTANMELDUNG

(11) **EP 3 040 530 A1**
(43) Veröffentlichungstag der Anmeldung: **06.07.2016**
(21) Anmeldenummer: 15195413.8
(22) Anmeldetag: 19.11.2015
(51) Int. Cl.: F01N 3/20, F01N 3/28, F01N 13/00

(54) **MISCHERANORDNUNG FÜR EIN ABGASSYSTEM EINER BRENNKRAFTMASCHINE**

(30) Priorität: 29.12.2014 DE 102014119671
(71) Anmelder: Eberspächer Exhaust Technology GmbH & Co. KG, 66539 Neunkirchen (DE)
(72) Erfinder: Calvo, Silvia, 73730 Esslingen (DE); Kurpejovic, Enver, 73230 Lenningen (DE); Semenov, Oleksandr, 73207 Plochingen (DE); Binder, David, 73728 Esslingen (DE); Birgler, Markus, 73249 Wernau (DE); Glaser, Steffen, 70188 Stuttgart (DE); Ihring, Michael, 73760 Ostfildern (DE); Feyl-Narrain, Gita, 73730 Esslingen (DE); Hölsch, Ralf, 78736 Epfendorf (DE); Hänisch, Jan, 73765 Neuhausen (DE); Varelis, Stefanos, 70771 Leinfelden (DE)
(74) Vertreter: RLTG

(57) **Zusammenfassung**

Eine Mischeranordnung (10) für ein Abgasführungssystem einer Brennkraftmaschine, umfasst einen von Abgasen in einer Hauptströmungsrichtung (S) durchströmbaren Strömungskanal (14) in einem Strömungskanalelement (16) sowie wenigstens ein in dem Strömungskanalelement (16) zur Veränderung einer Durchmischungswirkung bewegbares Mischerelement (12).

## Beschreibung

Die vorliegende Erfindung betrifft eine Mischeranordnung für ein Abgasführungssystem einer Brennkraftmaschine. Ein derartiges Abgasführungssystem umfasst im Allgemeinen einen von Abgasen in einer Hauptströmungsrichtung durchströmbaren Strömungskanal in einem Strömungskanalelement. Ein derartiger Strömungskanal kann von einer Brennkraftmaschine, beispielsweise einer Dieselbrennkraftmaschine, zu einer Katalysatoranordnung und dann weiter zur Umgebung führen.

Um die immer strenger werdenden Anforderungen hinsichtlich der Schadstoffemissionen von Brennkraftmaschinen, insbesondere Dieselbrennkraftmaschinen, erfüllen zu können, ist es bekannt, Zusatzstoffe, wie z. B. Harnstoff, stromabwärts der Brennkraftmaschine in den Abgasstrom einzuleiten. Zur Erlangung einer größtmöglichen Wirkung ist es erforderlich, derartige Zusatzstoffe effizient mit den Abgasen zu durchmischen. Hierbei besteht jedoch das Problem, dass die Integration von Mischerelementen in den Abgasstrom aufgrund des durch derartige Mischerelemente generierten Strömungswiderstandes den Abgasgegendruck steigert, was eine Minderung der Leistung einer Brennkraftmaschine zur Folge hat.

Es ist die Aufgabe der vorliegenden Erfindung, eine Mischeranordnung für ein Abgasführungssystem einer Brennkraftmaschine vorzusehen, welches bei grundsätzlich effizienter Vermischung von Abgasen und in diese eingeleiteten Zusatzstoffen die Erlangung hoher Motorleistungen ermöglicht.

Erfindungsgemäß wird diese Aufgabe gelöst durch eine Mischeranordnung für ein Abgasführungssystem einer Brennkraftmaschine, umfassend einen von Abgasen in einer Hauptströmungsrichtung durchströmbaren Strömungskanal in einem Strömungskanalelement sowie wenigstens ein in dem Strömungskanalelement zur Veränderung einer Durchmischungswirkung bewegbares Mischerelement.

Die erfindungsgemäße Mischeranordnung ist derart aufgebaut, dass aufgrund der Veränderung der Durchmischungswirkung der Mischeranordnung auch die durch die Mischeranordnung zur Erlangung der Durchmischungswirkung unvermeidbare teilweise Verdämmung des Strömungskanals variiert werden kann. Insbesondere dann, wenn eine Brennkraftmaschine zur Abgabe höchster Leistungen betrieben wird, kann die Mischeranordnung in einen Zustand gebracht werden, in welchem eine geringerer Abgasgegendruck erzeugt wird, aber auch eine vergleichsweise geringe Durchmischungswirkung erzielt wird, so dass bei zwar etwas schlechterer Durchmischung der Verbrennungsabgase und des Zusatzstoffes eine sehr hohe Motorleistung abgerufen werden kann. In Zuständen, in welchen eine derart hohe Leistung nicht erforderlich ist bzw. gefordert wird, kann die Mischeranordnung in einen Zustand mit hoher Durchmischungswirkung gebracht werden, so dass eine effiziente Minderung des Schadstoffanteils in den zur Umgebung abgegebenen Abgasen erreicht wird.

Um das Stellen der Mischeranordnung in Zustände verschiedener Durchmischungswirkung in einfacher Weise erlangen zu können, wird vorgeschlagen, dass wenigstens ein Mischerelement der Mischeranordnung um eine zu der Hauptströmungsrichtung im Wesentlichen orthogonale Schwenkachse schwenkbar ist. Alternativ oder zusätzlich kann vorgesehen sein, dass wenigstens ein Mischerelement um eine im Wesentlichen in der Hauptströmungsrichtung sich erstreckende Schwenkachse schwenkbar ist.

Bei einer weiteren Möglichkeit, die Durchmischungswirkung durch Bewegung eines Mischerelements verändern zu können, kann vorgesehen sein, dass wenigstens ein Mischerelement der Mischeranordnung in einer Richtung im Wesentlichen quer zu der Hauptströmungsrichtung verschiebbar ist.

Bei der erfindungsgemäßen Mischeranordnung kann wenigstens ein Mischerelement in einen ersten Betriebszustand mit maximaler Durchmischungswirkung der Mischeranordnung und in einen zweiten Betriebszustand mit minimaler Durchmischungswirkung der Mischeranordnung bewegbar sein. Diese verschiedenen Betriebszustände korrespondieren gleichermaßen mit Zuständen verschiedener Verdämmung bzw. verschiedenen Strömungswiderstandes. Im ersten Betriebszustand, also dem Zustand, in welchem eine maximale Durchmischungswirkung der Mischeranordnung erreicht wird, wird eine sehr starke Verwirbelung der Strömung im Strömungskanal hervorgerufen, was mit einem vergleichsweise großen Strömungswiderstand und einem entsprechenden Abgasgegendruck einhergeht. Im zweiten Betriebszustand, also dem Zustand minimaler Durchmischungswirkung, ist die Einwirkung auf die Strömung durch einen vergleichsweise geringen Strömungswiderstand entsprechend klein, so dass die Mischeranordnung auch nur einen vergleichsweise geringen Anstieg im Abgasgegendruck bewirkt und somit die Erlangung sehr hoher Motorleistungen ermöglicht.

Um eine kompakte Bauart der erfindungsgemäßen Mischeranordnung erlangen zu können, wird vorgeschlagen, dass wenigstens ein Mischerelement im ersten Betriebszustand und im zweiten Betriebszustand im Wesentlichen vollständig im Strömungskanal positioniert ist.

Eine minimale Einwirkung der Mischeranordnung auf die Strömung im Strömungskanal in der zweiten Betriebsstellung kann dadurch erreicht werden, dass wenigstens ein Mischerelement im zweiten Betriebszustand im Wesentlichen nicht im Strömungskanal positioniert ist. Hierzu kann beispielsweise vorgesehen sein, dass eine an den Strömungskanal angrenzende Mischerelementaufnahmekammer zur Aufnahme des Mischerelements in seinem zweiten Betriebszustand vorgesehen ist.

Um mit der erfindungsgemäßen Mischeranordnung eine effiziente Durchmischung der Abgase mit in diese eingeleiteten Zusatzstoffen erlangen zu können, wird vorgeschlagen, dass wenigstens ein Mischerelement wenigstens ein Strömungsablenkelement aufweist, wobei das wenigstens eine Strömungsablenkelement wenigstens eine wenigstens in dem ersten Betriebszustand zu einer Hauptströmungsrichtung angewinkelt angeordnete Strömungsablenkfläche aufweist. Hierbei kann beispielsweise vorgesehen sein, dass wenigstens eine Reihe von in einer Reihenrichtung aufeinanderfolgenden Strömungsablenkelementen vorgesehen ist.

Bei derartiger reihenmäßiger Anordnung der Strömungsablenkelemente kann zur Bewegung wenigstens eines Mischerelements zwischen seinen verschiedenen Betriebszuständen vorgesehen sein, dass die Schwenkachse sich im Wesentlichen in Richtung der oder orthogonal zu der Reihenrichtung erstreckt.

Die Durchmischungswirkung der Mischeranordnung kann dadurch gesteigert werden, dass wenigstens zwei im Wesentlichen quer zur Hauptströmungsrichtung nebeneinander angeordnete Reihen von Strömungsablenkelementen vorgesehen sind, oder/und dass wenigstens zwei in der Hauptströmungsrichtung aufeinander folgende Reihen von Strömungsablenkelementen vorgesehen sind.

Um bei der erfindungsgemäßen Mischeranordnung wenigstens ein Mischerelement zur Erlangung verschiedener Durchmischungszustände bewegen zu können, wird vorgeschlagen, dass wenigstens einem Mischerelement der Mischeranordnung ein Bewegungsantrieb zugeordnet ist.

Die vorliegende Erfindung betrifft ferner ein Abgasführungssystem für eine Brennkraftmaschine, umfassend wenigstens eine erfindungsgemäß aufgebaute Mischeranordnung.

Die vorliegende Erfindung wird nachfolgend mit Bezug auf die beiliegenden Figuren detailliert beschrieben. Es zeigt:
- Fig. 1: in teilweise prinzipartiger Darstellung eine Mischeranordnung für ein Abgasführungssystem einer Brennkraftmaschine, betrachtet in einer Blickrichtung quer zu einer Hauptströmungsrichtung von Abgasen;
- Fig. 2: eine Ansicht der Mischeranordnung der Fig. 1, betrachtet in Hauptströmungsrichtung der Abgase;
- Fig. 3: eine perspektivische Darstellung der Mischeranordnung der Fig. 1;
- Fig. 4: in perspektivischer Darstellung ein Mischerelement der Mischeranordnung der Fig. 1;
- Fig. 5: eine der Fig. 1 entsprechende Darstellung einer Mischeranordnung bei in einem Zustand minimaler Mischungswirkung positioniertem Mischerelement;
- Fig. 6: eine der Fig. 2 entsprechende Darstellung der Mischeranordnung bei in dem Zustand minimaler Mischungswirkung positioniertem Mischerelement;
- Fig. 7: die Mischeranordnung der Fig. 5 in perspektivischer Ansicht;
- Fig. 8: eine der Fig. 1 entsprechende Darstellung einer alternativen Ausgestaltungsart einer Mischeranordnung;
- Fig. 9: die Mischeranordnung der Fig. 8 betrachtet in Hauptströmungsrichtung der Abgase;
- Fig. 10: die Mischeranordnung der Fig. 8 in perspektivischer Ansicht;
- Fig. 11: ein Mischerelement der Mischeranordnung der Fig. 8 in perspektivischer Ansicht;
- Fig. 12: eine der Fig. 8 entsprechende Ansicht der Mischeranordnung bei in einem Zustand minimaler Durchmischungswirkung positioniertem Mischerelement;
- Fig. 13: eine der Fig. 9 entsprechende Ansicht bei in dem Zustand minimaler Durchmischungswirkung positioniertem Mischerelement;
- Fig. 14: die Mischeranordnung der Fig. 12 in perspektivischer Ansicht;
- Fig. 15: eine Ansicht einer alternativen Ausgestaltungsart einer Mischeranordnung, betrachtet in einer Hauptströmungsrichtung von Abgasen;
- Fig. 16: eine der Fig. 15 entsprechende Ansicht der Mischeranordnung bei in einem Zustand minimaler Durchmischungswirkung positioniertem Mischerelement;
- Fig. 17: eine prinzipartige Darstellung einer weiteren alternativen Ausgestaltungsart einer Mischeranordnung für ein Abgasführungssystem;
- Fig. 18: die Mischeranordnung der Fig. 17 in einem Zustand minimaler Durchmischungswirkung;
- Fig. 19: eine weitere prinzipartige Darstellung einer alternativen Ausgestaltungsart einer Mischeranordnung für ein Abgasführungssystem;
- Fig. 20: die Mischeranordnung der Fig. 19 in einem Zustand minimaler Durchmischungswirkung.

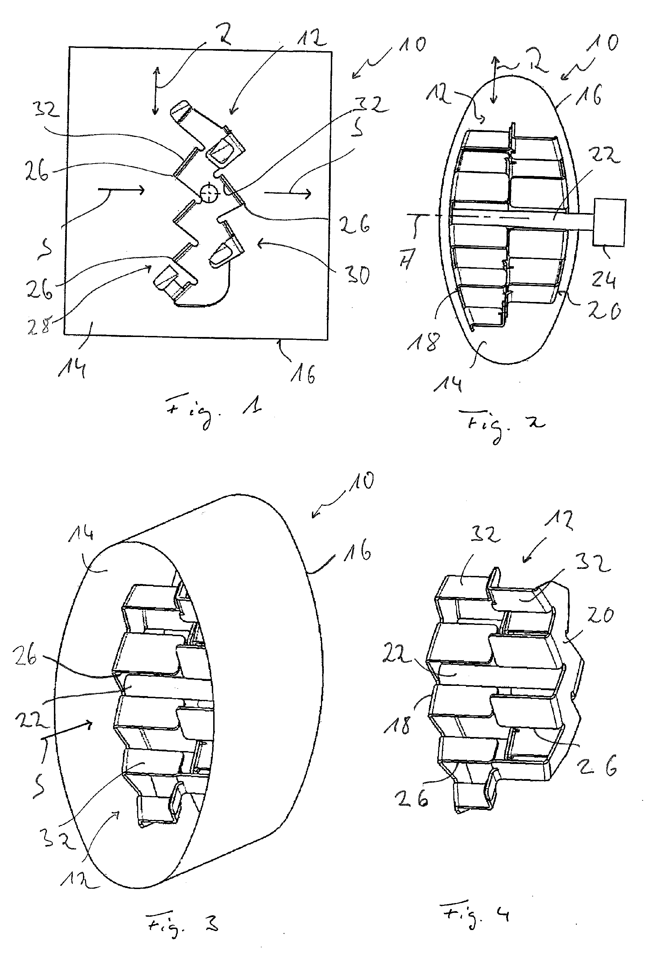

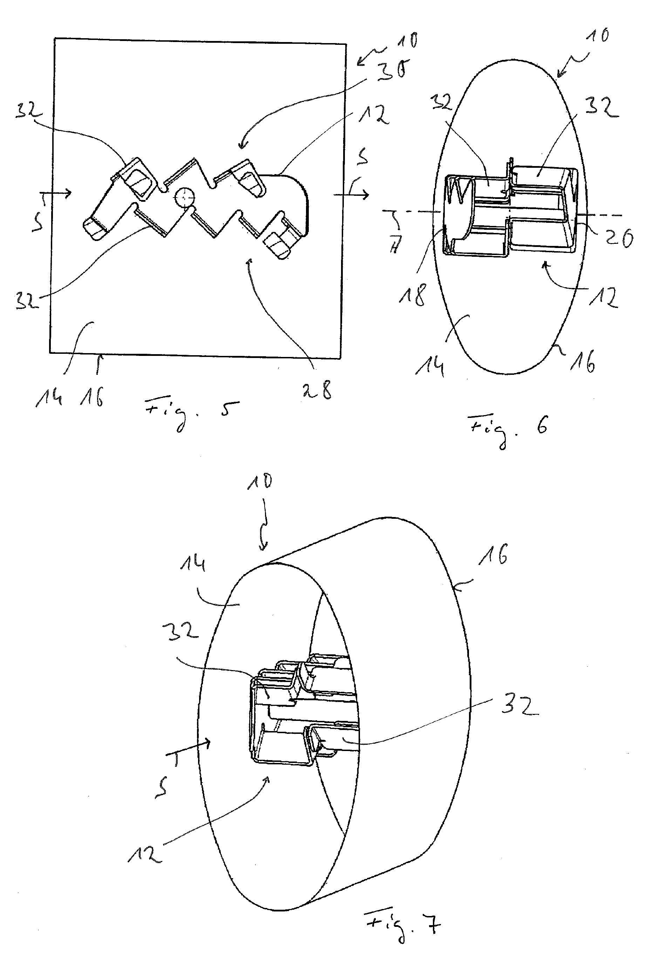

Mit Bezug auf die Fig. 1 bis 7 wird nachfolgend eine erste Ausgestaltungsform einer Mischeranordnung 10 für ein Abgasführungssystem beschrieben. Dabei zeigen die Fig. 1 bis 4 einen ersten Betriebszustand eines allgemein mit 12 bezeichneten Mischerelements der Mischeranordnung 10, in welchem die Mischeranordnung 10 eine maximale Durchmischungswirkung für in einer Hauptströmungsrichtung S in einem Strömungskanal 14 strömende Abgase und in diese eingeleiteten Zusatzstoff erzeugt. Dabei ist der Strömungskanal 14 in einem rohrartig ausgebildeten Strömungskanalelement 16 ausgebildet. Die Fig. 5 bis 7 zeigen die Mischeranordnung 10 bei in einem zweiten Betriebszustand mit minimaler Durchmischungswirkung der Mischeranordnung 10 positioniertem Mischerelement 12.

Bei der in den Fig. 1 bis 7 dargestellten Ausgestaltungsform der Mischeranordnung 10 ist das rohrartige Strömungskanalelement 16 derart gestaltet, dass es einen näherungsweise elliptischen Strömungsquerschnitt für die im Allgemeinen in der Hauptströmungsrichtung S strömenden Abgase bzw. Zusatzstoffe bereitstellt. Es sei hier darauf hingewiesen, dass auch andere Strömungsquerschnittsgeometrien, beispielsweise ein kreisrunder Strömungsquerschnitt, unter Beibehalt der Prinzipien der vorliegenden Erfindung realisierbar sind.

Das Mischerelement 12 umfasst im dargestellten Beispiel zwei beispielsweise als Blechumformteile bereitgestellte Mischerelemententeile 18, 20, die auf einer gemeinsamen Schwenkwelle 22 fest getragen sind. Die Schwenkwelle 22 ist beispielsweise am Strömungskanalelement 16 um eine Schwenkachse A schwenkbar bzw. drehbar getragen und kann sich beispielsweise an einer Seite aus dem Strömungskanalelement 16 heraus erstrecken. Durch einen beispielsweise elektromotorischen Bewegungsantrieb 24 kann die Schwenkwelle 22 zur Verschwenkung bzw. Verdrehung um die Schwenkachse A angetrieben werden, wodurch eine Verschwenkung des Mischerelements 12 bzw. der beiden an der Schwenkwelle 22 getragenen Mischerelemententeile 18, 20 zwischen dem in Fig. 1 dargestellten ersten Betriebszustand und dem in Fig. 5 dargestellten zweiten Betriebszustand erreicht werden kann.

Wie in Fig. 1 anhand des Mischerelemententeils 18 erkennbar, ist an jedem der Mischerelemententeile 18, 20 eine Mehrzahl von Strömungsablenkelementen 26 vorgesehen. Die Strömungsablenkelemente 26 sind in zwei in der Hauptströmungsrichtung S aufeinanderfolgenden Reihen 28, 30 angeordnet, wobei die Reihe 28 von Strömungsablenkelementen 26 stromaufwärts bezüglich der Reihe 30 von Strömungsablenkelementen 26 positioniert ist. Dabei sind in jeder Reihe 28, 30 die Strömungsablenkelemente 26 in einer Reihenrichtung R aufeinanderfolgend angeordnet, wobei bei im ersten Betriebszustand positioniertem Mischerelement 12 die Reihenrichtung R im Wesentlichen orthogonal zur Hauptströmungsrichtung S steht und auch orthogonal zur Schwenkachse A ist.

Jedes Strömungsablenkelement 26 stellt wenigstens eine zur Hauptströmungsrichtung S angewinkelt positionierte Strömungsablenkfläche 32 bereit. Wie ein Vergleich der Fig. 1 und 5 zeigt, stellen die Strömungsablenkelemente 26 der stromabwärtigen Reihe 30 von Strömungsablenkelementen 26 jeweils zwei zur Hauptströmungsrichtung S angewinkelte Strömungsablenkflächen 32 bereit, nämlich eine Strömungsablenkfläche 32, die im ersten Betriebszustand (Fig. 1) wirksam ist und der im ersten Betriebszustand stromaufwärts positionierten Reihe 28 von Strömungsablenkelementen 26 zu gewandt ist, und eine Strömungsablenkfläche 32, die in dem in Fig. 5 dargestellten zweiten Betriebszustand mit minimaler Durchmischungswirkung wirksam ist und von der Reihe 28 von Strömungsablenkelementen 26 weg orientiert angeordnet ist.

Es ist hier noch einmal darauf hinzuweisen, dass das Mischerelemententeil 20 in entsprechender Weise aufgebaut sein kann. Wie insbesondere die Fig. 4 zeigt, können die Strömungsablenkelemente 26 des Mischerelemententeils 20 in der auch dort jeweils vorhandenen Reihenrichtung aufeinander folgend so angeordnet sein, dass sie bezüglich der Anstellung der Strömungsablenkflächen 32 der Strömungsablenkelemente 26 des Mischerelemententeils 18 gegensinnig angestellt sind, wodurch eine verbesserte Durchmischungswirkung erzielt werden kann.

Ein Vergleich der Fig. 1 bis 4 einerseits und der Fig. 5 bis 7 andererseits zeigt deutlich, dass im ersten Betriebszustand der Fig. 1 bis 4 das Mischerelement 12 aufgrund seiner Orientierung im Wesentlichen quer zur Hauptströmungsrichtung S eine wesentlich stärkere Verdämmung des Strömungsquerschnitts des Strömungskanals 14 bewirkt, insbesondere eine wesentlich größere Anströmfläche für die in der Hauptströmungsrichtung S im Strömungskanal 14 strömenden Abgase bereitstellt. Im zweiten Betriebszustand der Fig. 5 ist das Mischerelement 12 im Wesentlichen in der Hauptströmungsrichtung S sich erstreckend orientiert. Aufgrund der nach wie vor bezüglich der Hauptströmungsrichtung S angewinkelten Strömungsablenkflächen 32 der beiden Reihen 28, 30 bei jedem der Mischerelemententeile 18, 20 wird zwar nach wie vor eine Durchmischung der Abgase mit dem in diese eingeleiteten Zusatzstoff generiert, jedoch mit deutlich geminderter Durchmischungswirkung im Vergleich zur Positionierung gemäß den Fig. 1 bis 4. Da im zweiten Betriebszustand der Fig. 5 bis 7 das Mischerelement 12 so positioniert ist, dass es nur einen vergleichsweise geringen Anteil der Strömungsquerschnittsfläche des Kanals 14 belegt, wird ein wesentlich geringerer Strömungswiderstand erzeugt und der Abgasgegendruck im Strömungskanal 14 bzw. in einem Abgasführungssystem ist im Vergleich zum ersten Betriebszustand der Fig. 1 bis 4 deutlich gemindert.

Mit dem in den Fig. 1 bis 7 dargestellten Aufbau einer Mischeranordnung 12 wird es möglich, abhängig von der geforderten Leistung einer Brennkraftmaschine entweder bei geringerer geforderter Leistung das Mischerelement 12 so zu positionieren, dass die Mischeranordnung 10 eine maximale oder vergleichsweise große Durchmischungswirkung generiert, so dass aufgrund der sehr effizienten Durchmischung der Schadstoffausstoß minimiert wird. Wird eine höhere oder eine maximale Leistungsabgabe von einer Brennkraftmaschine gefordert, kann das Mischerelement 12 durch den Bewegungsantrieb 24 in einen Zustand gebracht werden, in welchem eine Beeinträchtigung des freien Strömungsquerschnitts im Kanal 14 minimal ist und gleichermaßen auch die Durchmischungswirkung minimal ist. Der somit auch geminderte Abgasgegendruck ermöglicht die Erlangung höchster Leistung in einer Brennkraftmaschine.

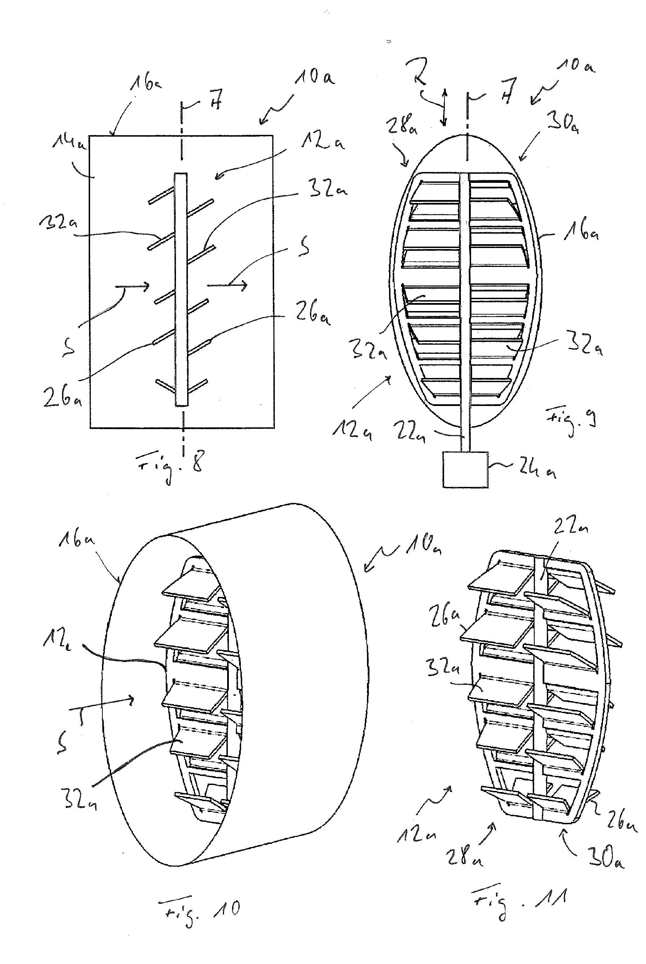

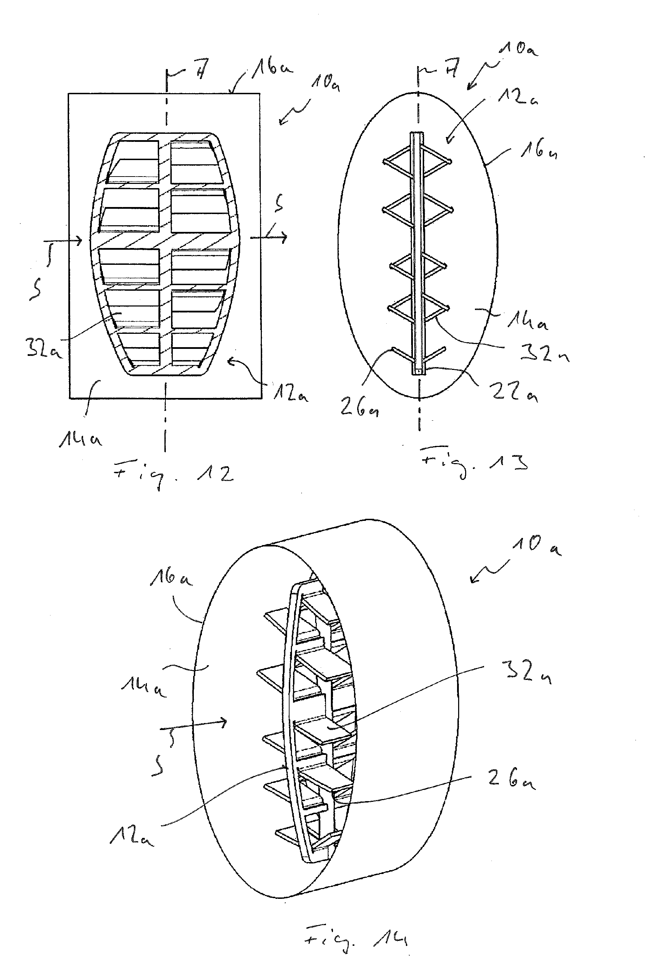

Eine alternative Ausgestaltungsart einer Mischeranordnung ist in den Fig. 8 bis 14 gezeigt. Komponenten, welche vorangehend beschriebenen Komponenten hinsichtlich Aufbau bzw. Funktion entsprechen, sind mit den gleichen Bezugszeichen unter Hinzufügung eines Anhangs "a" bezeichnet. In den Fig. 8 bis 11 ist die Mischeranordnung in einem Zustand maximaler Durchmischungswirkung dargestellt, während in den Fig. 12 bis 14 die Mischeranordnung in ihrem Zustand minimaler Durchmischungswirkung ist.

Die Mischeranordnung 10a umfasst ein plattenartiges Mischerelement 12a, an welchem zwei Reihen 28a, 30a von Strömungsablenkelementen 26a mit jeweiligen Strömungsablenkflächen 32a ausgebildet sind. Man erkennt insbesondere in Fig. 11, dass die Strömungsablenkflächen 32a der Strömungsablenkelemente 26a der beiden Reihen 28a, 30a zueinander gegensinnig bezüglich der Hauptströmungsrichtung S angestellt bzw. angewinkelt sein können. Um einander teilweise überlappende, in der Hauptströmungsrichtung S und entgegen zur Hauptströmungsrichtung S abgewinkelte Strömungsablenkelemente 26a bereitstellen zu können, können zwei beispielsweise aus Blechmaterial aufgebaute plattenartige Teile aneinander gelegt sein. Diese können an einer Schwenkwelle 22a getragen sein, deren Schwenk- bzw. Drehachse A in diesem Ausgestaltungsbeispiel sich in der Reihenrichtung R erstreckt. Des Weiteren liegt in diesem Ausgestaltungsbeispiel die Schwenkachse A in Richtung der größeren der beiden Halbachsen einer im Wesentlichen die Querschnittsgeometrie des Strömungskanals 14a beschreibenden Ellipse, während bei der vorangehend beschriebenen Ausgestaltungsform die Schwenkachse A im Wesentlichen in Richtung der kleineren der beiden Halbachsen, also in Richtung der geringeren Abmessung des Strömungskanalelements orientiert ist. Durch den mit der Schwenkwelle 22a gekoppelten Bewegungsantrieb 24a kann das Mischerelement 12a zwischen dem in den Fig. 8 bis 11 dargestellten ersten Betriebszustand und dem in den Fig. 12 bis 14 dargestellten zweiten Betriebszustand bewegt werden. Im ersten Betriebszustand ist der durch das Mischerelement 12a im Wesentlichen belegte Anteil des Strömungsquerschnitts des Strömungskanals 14a maximal, so dass mit den Strömungsablenkflächen 32a eine maximale Durchmischungswirkung generiert wird. Im zweiten Betriebszustand ist das Mischerelement 12a so orientiert, dass die Strömungsablenkflächen 32a der Strömungsablenkelemente 26a im Wesentlichen parallel zur Hauptströmungsrichtung S liegen, so dass durch die Strömungsablenkelemente 26a nahezu keine Verwirbelung und somit eine minimale Durchmschungswirkung erzeugt wird. In diesem Zustand ist der Abgasgegendruck im Strömungskanal 14a minimal, so dass die Erlangung höchster Leistung in einer Brennkraftmaschine ermöglicht ist.

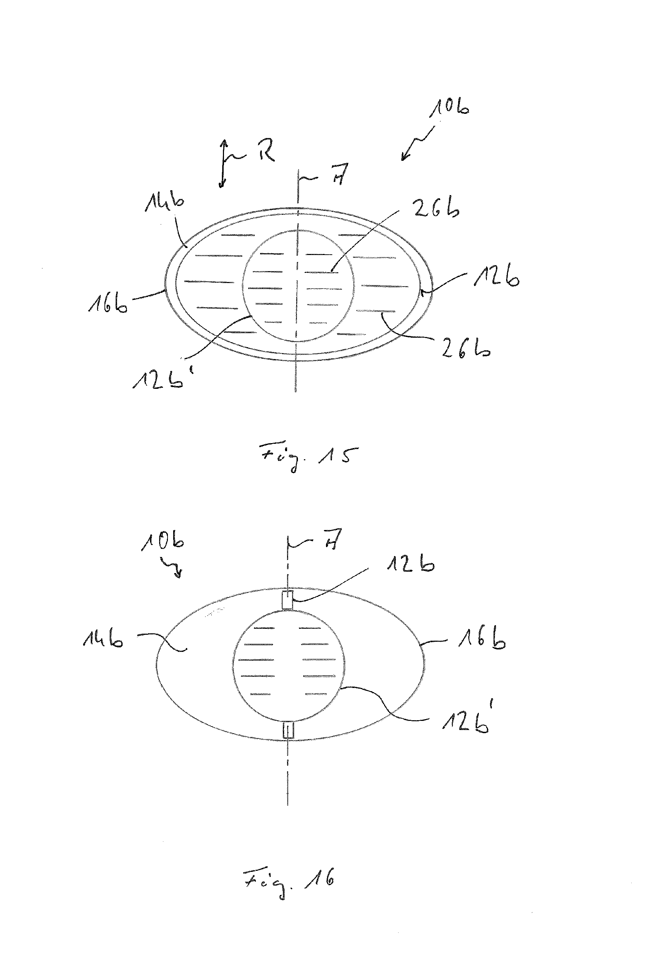

Eine weitere alternative Ausgestaltungsform einer Mischeranordnung ist in den Fig. 15 und 16 dargestellt. Hier sind Komponenten, welche vorangehend beschriebenen Komponenten hinsichtlich Aufbau bzw. Funktion entsprechen, mit den gleichen Bezugszeichen unter Hinzufügung eines Anhangs "b" bezeichnet.

Die Mischeranordnung 10b dieser Ausgestaltungsform umfasst zwei im ersten Betriebszustand der Mischeranordnung 10b, der in Fig. 15 dargestellt ist, im Wesentlichen orthogonal zur hier auch orthogonal zur Zeichenebene stehenden Hauptströmungsrichtung orientierte, beispielsweise plattenartige Mischerelemente 12b, 12b'. Es sei auch hier darauf hingewiesen, dass, obgleich der Strömungsquerschnitt hier mit ellipsenartiger Kontur dargestellt ist, auch das Aufbauprinzip der Fig. 15 und 16 mit jedwedem anderen Strömungsquerschnitt kombinierbar ist.

Bei der in den Fig. 15 und 16 dargestellten Ausgestaltungsform sind die beiden Mischerelemente 12b, 12b' ineinander geschachtelt angeordnet, d.h., das Mischerelement 12b ist bzw. kann so angeordnet werden, dass es das Mischerelement 12b' umgibt. In dem in Fig. 15 dargestellten ersten Betriebszustand der Mischeranordnung 10b belegen die beiden Mischerelemente 12b, 12b' einen maximalen Anteil des Strömungsquerschnitts des Strömungskanals 14b, so dass durch die hier nur in schematischer Form angedeuteten Strömungsablenkelemente 26b der beiden Mischerelemente 12b, 12b', welche Strömungsablenkelemente 26b auch hier in mehreren Reihen angeordnet sein können, eine maximale Durchmischungswirkung generiert wird.

Das äußere der beiden Mischerelemente, also das Mischerelement 12b, ist durch einen hier nicht dargestellten Bewegungsantrieb um eine beispielsweise in Richtung der kürzeren Erstreckung des Strömungskanalelements 26b sich erstreckende Schwenkachse A schwenkbar. Wird das Mischerelement 12b in seine in Fig. 16 dargestellte Stellung gebracht, in welcher es im Wesentlichen orthogonal zur Zeichenebene steht, ist der durch die beiden Mischerelemente 12b, 12b' belegte Strömungsquerschnitt des Strömungskanals 14b deutlich geringer, so dass bei geringerer Durchmischungswirkung auch ein geringerer Abgasgegendruck erzeugt wird und höhere Motorleistungen erzielbar sind.

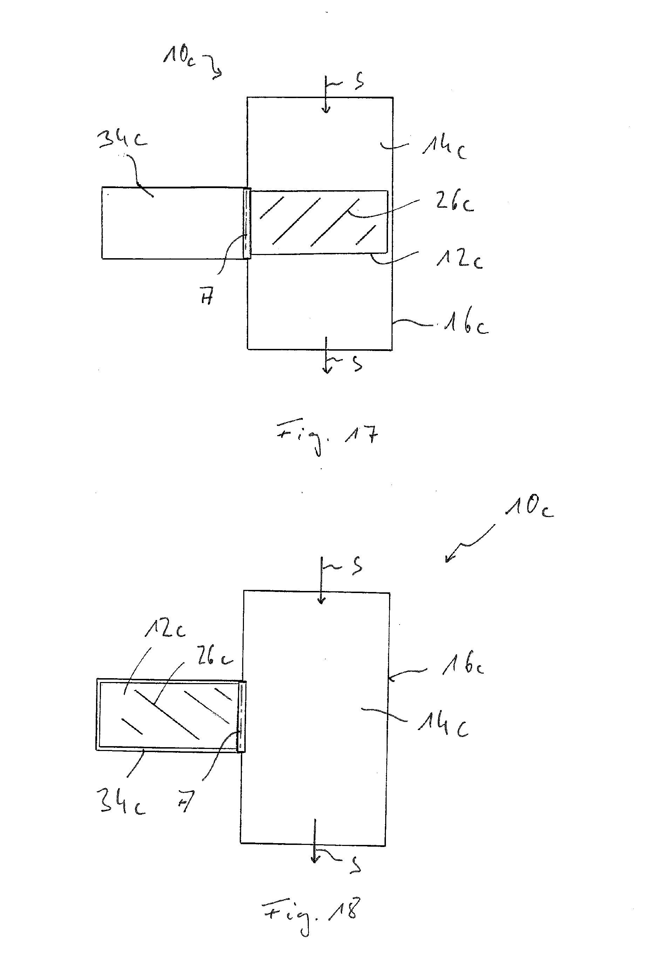

Bei dieser Anordnung kann das innere Mischerelement 12b' grundsätzlich feststehend ausgebildet sein. Um eine noch feinfühligere Verstellung zwischen einem Zustand maximaler Durchmischungswirkung und einem Zustand minimaler Durchmischungswirkung erzielen zu können, könnte auch das Mischerelement 12b' verstellbar sein und beispielsweise in einen Zustand gebracht werden, der dem Zustand des Mischerelements 12b in Fig. 16 entspricht, so dass aufgrund der dann im Wesentlichen parallel zur Hauptströmungsrichtung S orientierten Positionierung der beiden Mischerelemente 12b, 12b' eine minimale Belegung des Strömungsquerschnitts des Strömungskanals 14b erreicht wird. Bei dieser Ausgestaltung könnte jedem der beiden Mischerelemente 12b, 12b' ein eigener Bewegungsantrieb zugeordnet sein. Eine weitere alternative Ausgestaltungsform einer Mischeranordnung ist in den Fig. 17 und 18 dargestellt. Bauteile, welche vorangehend beschriebenen Bauteilen hinsichtlich Aufbau bzw. Funktion entsprechen, sind mit den gleichen Bezugszeichen unter Hinzufügung eines Anhangs "c" bezeichnet.

Während bei den vorangehend mit Bezug auf die Fig. 1 bis 16 beschriebenen Ausgestaltungsformen die dort vorhandenen Mischerelemente sowohl im ersten Betriebszustand, als auch im zweiten Betriebszustand jeweils vollständig im Strömungskanal positioniert sind und lediglich ihr Wirkungsquerschnitt durch verschiedenen Positionierung variiert wird, ist bei der in den Fig. 17 bis 18 dargestellten Ausgestaltungsform ein Mischerelement 12c vorgesehen, welches zwar in dem in Fig. 17 dargestellten ersten Betriebszustand im Strömungskanal 14c positioniert ist und somit mit seinen schematisch dargestellten Strömungsablenkelementen 26c für eine Verwirbelung und somit Durchmischung sorgen kann. In dem in Fig. 18 dargestellten zweiten Betriebszustand ist das Mischerelement 12c im Wesentlichen nicht mehr im Strömungskanal 14c positioniert, so dass die in der Hauptströmungsrichtung S strömenden Abgase im Wesentlichen ungehindert durch das Strömungskanalelement 16c strömen können. Um dies erlangen zu können, kann eine seitlich an den Strömungskanal 14c anschließende Mischerelementaufnahmekammer 34c vorgesehen sein, in welcher das Mischerelement 12c zur Erlangung des zweiten Betriebszustands, also des Betriebszustands mit minimaler Durchmischungswirkung, positioniert werden kann. Das Mischerelement 12c kann, beispielsweise angetrieben durch einen nicht dargestellten Bewegungsantrieb, um eine zur Hauptströmungsrichtung S im Wesentlichen parallel liegende Schwenkachse A aus dem Strömungskanal 14c heraus in die Mischerelementaufnahmekammer 34c verschwenkt werden. Ist das Mischerelement 12c in der Mischerelementaufnahmekammer 34c aufgenommen, so ist der Strömungskanal 14c im Wesentlichen ohne Beeinträchtigung durch das Mischerelement 12c für die Durchströmung freigegeben.

Die Bewegung des Mischerelements 12c von dem in Fig. 17 dargestellten Zustand zu dem in Fig. 18 dargestellten Zustand kann alternativ zur Verschwenkung um eine zur Hauptströmungsrichtung S im Wesentlichen parallele Schwenkachse A durch eine Verschiebung, beispielsweise Linearverschiebung, erlangt werden.

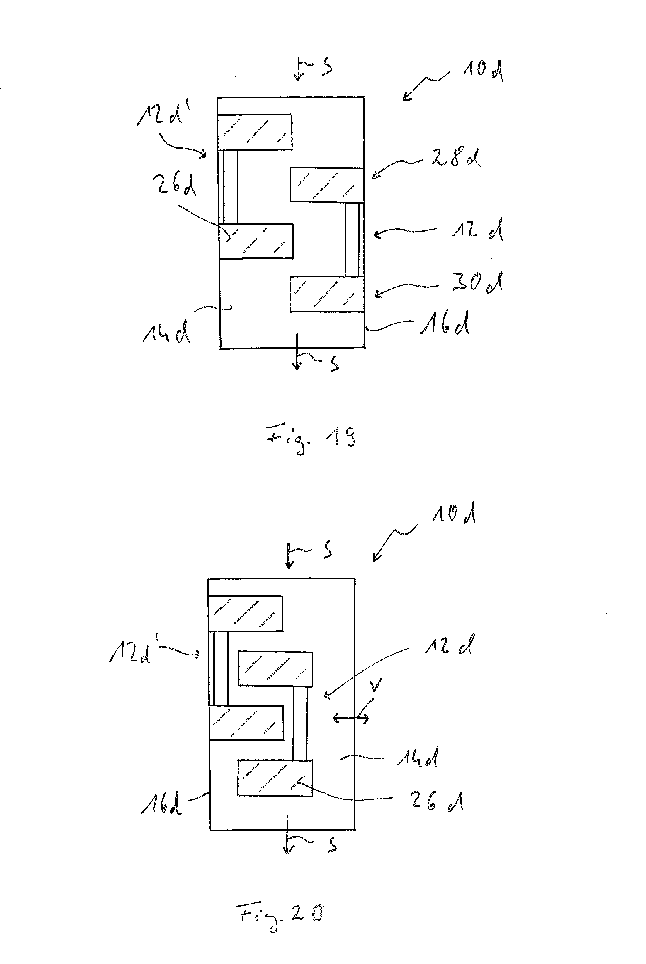

Eine Ausgestaltungsform einer Mischeranordnung, bei welcher eine derartige Verschiebebewegung eines Mischerelements genutzt wird, um Zustände verschiedener Durchmischungswirkungen erlangen zu können, ist in den Fig. 19 und 20 dargestellt. Komponenten, welche vorangehend beschriebenen Komponenten hinsichtlich Aufbau bzw. Funktion entsprechen, sind mit den gleichen Bezugszeichen unter Hinzufügung eines Anhangs "d" bezeichnet.

Bei der in den Fig. 19 und 20 dargestellten Ausgestaltungsform einer Mischeranordnung 10d ist eines der Mischerelemente, nämlich das Mischerelement 12d, bewegbar angeordnet, während das andere Mischerelement, nämlich das Mischerelement 12d', im Strömungskanal 14d fest positioniert sein kann. Jedes der Mischerelemente 12d, 12d' kann mit einer Mehrzahl von Strömungsablenkelementen 26d, beispielsweise positioniert in in der Hauptströmungsrichtung S aufeinanderfolgenden Reihen 28d, 30d, ausgebildet sein.

In Fig. 19 sind die beiden Mischerelemente 12d, 12d' so positioniert, dass sie quer zur Hauptströmungsrichtung S einen minimalen bzw. keinen Überlapp aufweisen und somit den Strömungsquerschnitt im Strömungskanal 14d in maximalem Ausmaß belegen. Somit wird eine maximale Durchmischungswirkung der im Strömungskanal 14d strömenden Abgas mit dem in diese eingeleiteten Zusatzstoff gewährleistet.

Soll von dem in Fig. 19 dargestellten ersten Betriebszustand der Mischeranordnung 10d zu dem in Fig. 20 dargestellten zweiten Betriebszustand der Mischeranordnung 10d übergegangen werden, wird das Mischerelement 14d im Wesentlichen quer zur Hauptströmungsrichtung S in einer Verschieberichtung V verschoben, beispielsweise linear verschoben. Dabei wird ein stärkerer Überlapp der beiden Mischerelemente 12d, 12d' erzeugt, wodurch der im Strömungskanal 14d belegte Querschnitt abnimmt. Bei maximalem Überlapp der beiden Mischerelemente 12d, 12d' ist die Belegung des Strömungsquerschnitts minimal und dementsprechend auch die Durchmischungswirkung. Auch der Abgasgegendruck im Abgasführungssystem ist in diesem Zustand minimal, so dass höchste Leistungen von einer Brennkraftmaschine abgerufen werden können.

Die Bewegung des Mischerelements 12d im Strömungskanal 14d kann durch einen in den Fig. 19 und 20 nicht dargestellten, beispielsweise elektromotorisch ausgebildeten Linearverschiebeantrieb generiert werden. Grundsätzlich könnte die Anordnung auch derart sein, dass für das bewegbare Mischerelement 12d, ähnlich wie bei der vorangehend mit Bezug auf die Fig. 17 und 18 beschriebenen Ausgestaltungsform, seitlich angrenzend an den Strömungskanal 14d eine Mischerelementaufnahmekammer vorgesehen ist, in welche das Mischerelement 12d hineinbewegt werden kann, so dass im zweiten Betriebszustand eine Durchmischungswirkung nur noch durch das im Strömungskanal 14d positionierte Mischerelement 12d' erreicht wird.

## Patentansprüche

1. Mischeranordnung für ein Abgasführungssystem einer Brennkraftmaschine, umfassend einen von Abgasen in einer Hauptströmungsrichtung (S) durchströmbaren Strömungskanal (14;14a;14b;14c;14d) in einem Strömungskanalelement (16;16a;16b;16c;16d) sowie wenigstens ein in dem Strömungskanalelement (16;16a;16b;16c;16d) zur Veränderung einer Durchmischungswirkung bewegbares Mischerelement (12;12a;12b,12b';12c;12d,12d').

2. Mischeranordnung nach Anspruch 1,
**dadurch gekennzeichnet, dass** wenigstens ein Mischerelement (12;12a;12b) um eine zu der Hauptströmungsrichtung (S) im Wesentlichen orthogonale Schwenkachse (A) schwenkbar ist.

3. Mischeranordnung nach Anspruch 1 oder 2,
**dadurch gekennzeichnet, dass** wenigstens ein Mischerelement (12c) um eine im Wesentlichen in der Hauptströmungsrichtung (S) sich erstreckende Schwenkachse (A) schwenkbar ist.

4. Mischeranordnung nach einem der Ansprüche 1 bis 3,
**dadurch gekennzeichnet, dass** wenigstens ein Mischerelement (12d) in einer Richtung (V) im Wesentlichen quer zu der Hauptströmungsrichtung (S) verschiebbar ist.

5. Mischeranordnung nach einem der Ansprüche 1 bis 4,
**dadurch gekennzeichnet, dass** wenigstens ein Mischerelement (12;12a;12b,12b';12c;12d,12d') in einen ersten Betriebszustand mit maximaler Durchmischungswirkung der Mischeranordnung und in einen zweiten Betriebszustand mit minimaler Durchmischungswirkung der Mischeranordnung bewegbar ist.

6. Mischeranordnung nach Anspruch 5,
**dadurch gekennzeichnet, dass** wenigstens ein Mischerelement (12;12a;12b,12b';12d,12d') im ersten Betriebszustand und im zweiten Betriebszustand im Wesentlichen vollständig im Strömungskanal (14;14a;14b;14d) positioniert ist.

7. Mischeranordnung nach Anspruch 5 oder 6,
**dadurch gekennzeichnet, dass** wenigstens ein Mischerelement (12c) im zweiten Betriebszustand im Wesentlichen nicht im Strömungskanal (14c) positioniert ist.

8. Mischeranordnung nach Anspruch 7,
**dadurch gekennzeichnet, dass** eine an den Strömungskanal (14c) angrenzende Mischerelementaufnahmekammer (34c) zur Aufnahme des Mischerelements (12c) in seinem zweiten Betriebszustand vorgesehen ist.

9. Mischeranordnung nach einem der Ansprüche 5 bis 8,
**dadurch gekennzeichnet, dass** wenigstens ein Mischerelement (12;12a;12b,12b';12c;12d,12d') wenigstens ein Strömungsablenkelement (26;26a;26b;26c;26d) aufweist, wobei das wenigstens eine Strömungsablenkelement (26;26a;26b;26c;26d) wenigstens eine wenigstens in dem ersten Betriebszustand zur Hauptströmungsrichtung (S) angewinkelt angeordnete Strömungsablenkfläche (32;32a) aufweist.

10. Mischeranordnung nach Anspruch 9,
**dadurch gekennzeichnet, dass** wenigstens eine Reihe (28,30;28a,30a;28d,30d) von in einer Reihenrichtung (R) aufeinander folgenden Strömungsablenkelementen (26;26a;26b;26c;26d) vorgesehen ist.

11. Mischeranordnung nach Anspruch 2 und Anspruch 10,
**dadurch gekennzeichnet, dass** die Schwenkachse (A) sich im Wesentlichen in Richtung der oder orthogonal zu der Reihenrichtung (R) erstreckt.

12. Mischeranordnung nach Anspruch 10 oder Anspruch 11,
**dadurch gekennzeichnet, dass** wenigstens zwei im Wesentlichen quer zur Hauptströmungsrichtung nebeneinander angeordnete Reihen (28,30;28a,30a;28d,30d) von Strömungsablenkelementen (26;26a;26b;26c;26d) vorgesehen sind,
oder/und
dass wenigstens zwei in der Hauptströmungsrichtung (S) aufeinander folgende Reihen (28,30;28a,30a;28d,30d) von Strömungsablenkelementen (26;26a;26b;26c;26d) vorgesehen sind.

13. Mischeranordnung nach einem der Ansprüche 1 bis 12,
**dadurch gekennzeichnet, dass** wenigstens einem Mischerelement (12;12a;12b;12c;12d,) ein Bewegungsantrieb (24;24a) zugeordnet ist.

14. Abgasführungssystem für eine Brennkraftmaschine, umfassend wenigstens eine Mischeranordnung (10;10a;10b;10c;10d) nach einem der vorangehenden Ansprüche.
